# EUROPÄISCHE PATENTSCHRIFT

(11) **EP 3 069 875 B1**
(45) Veröffentlichungstag und Bekanntmachung des Hinweises auf die Patenterteilung: **05.07.2017**
(21) Anmeldenummer: 15159426.4
(22) Anmeldetag: 17.03.2015
(51) Int. Cl.: B32B 27/08, B32B 27/34, C08G 69/00, C08L 77/00, B32B 27/32

(54) **MEHRSCHICHTVERBUND MIT EINER FLUORPOLYMERSCHICHT**
MULTILAYER COMPOUND WITH ONE FLUOROPOLYMER LAYER
COMPOSITE MULTICOUCHES COMPRENANT UNE COUCHE FLUOROPOLYMÈRE

(43) Veröffentlichungstag der Anmeldung: 21.09.2016
(73) Patentinhaber: Evonik Degussa GmbH, 45128 Essen (DE)
(72) Erfinder: Nitsche, Jasmin, 44141 Dortmund (DE); Göring, Rainer, 46325 Borken (DE); Gahlmann, Klaus, 45770 Marl (DE); Böer, Michael, 59399 Olfen (DE); Resing, Mario, 48703 Stadtlohn (DE)

(56) Entgegenhaltungen:
- WO-A1-2006/056581
- DATABASE WPI Week 201505 Thomson Scientific, London, GB; AN 2015-00028R XP002745048, & JP 2014 240139 A (UBE IND LTD) 25. Dezember 2014 (2014-12-25)

## Beschreibung

Gegenstand der Erfindung ist ein Mehrschichtverbund, der eine Sperrschicht aus einem Fluorpolymer sowie eine Schicht aus einer Formmasse auf Basis eines schlagzähmodifizierten teilaromatischen Polyamids enthält. Der Mehrschichtverbund ist in erster Linie ein Hohlkörper, etwa ein Hohlprofil oder ein Behälter zum Durchleiten oder Lagern flüssiger oder gasförmiger Medien.

Bei der Entwicklung von Mehrschichtverbunden, die zum Beispiel als Rohr zur Führung flüssiger oder gasförmiger Medien in Kraftfahrzeugen eingesetzt werden, wird neben der Forderung nach einer ausreichenden Kraftstoffbeständigkeit durch die Automobilindustrie eine verbesserte Sperrwirkung insbesondere der Kraftstoffleitungen verlangt, um die Emissionen von Kraftstoffkomponenten in der Umwelt zu reduzieren. Dies hat zur Entwicklung von Mehrschichtrohrsystemen geführt, bei denen beispielsweise Fluorpolymere als Sperrschichtwerkstoff zum Einsatz kommen. Derartige Mehrschichtverbunde, die neben einer Fluorpolymerschicht weitere Schichten auf Basis aliphatischer Polyamide enthalten, sind beispielsweise aus der US 5 510 160, der EP 1270 208 A1 und der WO 01/81077 bekannt.

In der US 5 510 160 wird ein thermoplastischer Mehrschichtverbund beschrieben, der eine Schicht aus einer Polyamidformmasse und eine Schicht aus einer Formmasse enthält, die als Hauptkomponente Polyvinylidenfluorid (PVDF) sowie zusätzlich eine kleinere Menge eines Polyglutarimids enthält. Das Polyglutarimid bewirkt hierbei, dass die PVDF-Schicht fest auf der Polyamidschicht haftet. Die EP 1 270 208 A1 beschreibt Mehrschichtverbunde, die eine Schicht aus einer Polyamidformmasse und eine darauf haftende Schicht aus einem Fluorpolymer enthalten, das Carbonylgruppen enthält. Das Fluorpolymer ist insbesondere ein Ethylen-Tetrafluorethylen-Copolymer (ETFE) oder ein darauf basierendes Terpolymer. In der WO 01/81077 wird eine Kraftstoffleitung beschrieben mit einer Polyamidschicht und einer Schicht aus einem funktionalisierten Fluorpolymer auf Basis von Ethylen, Tetrafluorethylen und gegebenenfalls weiteren Comonomeren.

Da bei Automobilanwendungen im Motorraum ein Trend hin zu höheren Temperaturen besteht, reicht in vielen Fällen die Wärmeformbeständigkeit aliphatischer Polyamide für derartige Anwendungen nicht mehr aus. Daher gibt es seit einiger Zeit Bestrebungen, aliphatische Polyamide durch teilaromatische Polyamide zu ersetzen. So werden in der WO 2005/018891 Hohlkörper beschrieben, die mindestens eine Schicht aus einem schlagzähmodifizierten teilaromatischen Polyamid enthalten; sie können darüber hinaus Schichten aus einem aliphatischen Polyamid, aber keine weiteren Schichten enthalten. Diese Schrift lehrt, dass schlagzähmodifizierte teilaromatische Polyamide gegenüber PA12 eine verbesserte Sperrwirkung gegenüber der Diffusion von Kraftstoffkomponenten haben. Für viele Anwendungen, gerade auch bei höheren Temperaturen, reicht diese Sperrwirkung jedoch noch nicht aus.

Mehrschichtverbunde mit einer Fluorpolymerschicht und einer Schicht auf Basis eines teilaromatischen Polyamids sind im Prinzip bekannt; beispielsweise seien die EP 1 710 482 A1, die WO 2006/056581, die EP 2 551 101 A1, die EP 2 554 887 A1, die EP 2 666 823 A1, die US 2008/0083469 und die US 2008/0083470 genannt.

Für Automobilanwendungen im Motorraum wären Polyamid-Fluorpolymer-Verbunde wünschenswert, bei denen das Polyamid einen Kristallitschmelzpunkt Tₘ von mindestens 220 °C oder noch besser von mindestens 240 °C sowie eine ausreichende Kristallinität besitzt. Diese Kriterien werden von den im Markt erhältlichen, kristallinen teilaromatischen Polyamiden erfüllt. Wegen ihrer schlechten mechanischen Eigenschaften, insbesondere ihrer schlechten Schlagzähigkeit und geringen Bruchdehnung, sind diese jedoch für derartige Anwendungen ungeeignet. In der EP-Patentanmeldung mit dem Aktenzeichen 14185373.9 vom 18.09.2014 werden Messungen an Formmassen aus einem PA6T/6I/66 beziehungsweise aus einem PA10T/TMDT mit jeweils 30 Gew.-% unterschiedlicher Schlagzähmodifier vorgestellt; die Bruchdehnung liegt bei 3 bis 6 %. Weiteren Aufschluss gibt die US 2014/0299220 A1; deren Vergleichsbeispiel 22 zeigt ein Rohr mit einer 800 µm dicken Schicht aus einem schlagzähmodifizierten PA6T/6I/66 und einer 200 µm dicken Schicht aus einem ETFE, wobei die Bruchdehnung des Rohrs 13 % beträgt. Im Vergleichsbeispiel 24 wird ein entsprechendes Rohr gezeigt, dessen Polyamidschicht aus einem schlagzähmodifizierten PA9T besteht, dessen Diaminanteil ein 50 : 50-Isomerengemisch aus 1,9-Nonandiamin und 2-Methyl-1,8-octandiamin ist; hier liegt die Bruchdehnung bei 22 %. Schließlich zeigt das Vergleichsbeispiel 27 ein entsprechendes Rohr, dessen Polyamidschicht aus einem schlagzähmodifizierten weiteren PA6T/6I/66 besteht; hier liegt die Bruchdehnung bei 18 %. Wünschenswert ist jedoch eine Bruchdehnung des Rohrs von mehr als 100 %.

Rohre mit einer derart hohen Bruchdehnung werden in der US 2014/0299220 A1 beschrieben. Die Rohre dieser Veröffentlichung enthalten eine Fluorpolymerschicht sowie eine Schicht aus einer schlagzähmodifizierten Formmasse auf Basis eines teilaromatischen Polyamids; letzteres besteht zu 50 bis 75 Mol-% aus Untereinheiten, die sich von einer aromatischen Dicarbonsäure und einem aliphatischen Diamin mit 9 bis 13 C-Atomen herleiten, und zu 25 bis 50 Mol-% aus Untereinheiten, die aliphatisch sind und 8 bis 13 C-Atome pro Stickstoffatom haben. Bei dieser Lösung ist jedoch die Monomerbasis von der Diaminseite her relativ teuer.

Die Aufgabe der Erfindung besteht darin, einen Verbund mit einer Fluorpolymerschicht und einer Polyamidschicht zur Verfügung zu stellen, der eine hohe Wärmeformbeständigkeit sowie eine hohe Schlagfestigkeit und eine hohe Reißdehnung aufweist und bei dem darüber hinaus eine gute Schichtenhaftung erhalten wird.

Diese Aufgabe wird durch einen Mehrschichtverbund gelöst, der folgende Schichten enthält:
I. Eine erste Schicht (Schicht I) aus einer Formmasse, die zu mindestens 40 Gew.-%, vorzugsweise zu mindestens 50 Gew.-%, besonders bevorzugt zu mindestens 60 Gew.%, insbesondere bevorzugt zu mindestens 70 Gew.-% und ganz besonders bevorzugt zu mindestens 80 Gew.-% folgende Komponenten enthält:
   1) 60 bis 99 Gew.-Teile, vorzugsweise 65 bis 98 Gew.-Teile, besonders bevorzugt 68 bis 97 Gew.-Teile und insbesondere bevorzugt 70 bis 96 Gew.-Teile eines teilaromatischen Copolyamids, das aus Monomereinheiten besteht, die sich herleiten von
      α) 30 bis 90 Mol-%, vorzugsweise 35 bis 85 Mol-%, besonders bevorzugt 40 bis 80 Mol-%, insbesondere bevorzugt 41 bis 75 Mol-% und ganz besonders bevorzugt 45 bis 70 Mol-% einer Kombination von Hexamethylendiamin und Terephthalsäure sowie
      β) 70 bis 10 Mol-%, vorzugsweise 65 bis 15 Mol-%, besonders bevorzugt 60 bis 20 Mol-%, insbesondere bevorzugt 59 bis 25 Mol-% und ganz besonders bevorzugt 55 bis 30 Mol-% einer Kombination von Hexamethylendiamin und einer linearen aliphatischen Dicarbonsäure mit 8 bis 19 C-Atomen,
      wobei sich die Mol-%-Angaben auf die Summe von α) und β) beziehen und wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % des Hexamethylendiamins durch die äquivalente Menge eines anderen Diamins ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der Terephthalsäure durch die äquivalente Menge einer anderen aromatischen Dicarbonsäure und/oder 1,4-Cyclohexandicarbonsäure ersetzt sein kann und/oder wobei maximal 20 %, vorzugsweise maximal 15 %, besonders bevorzugt maximal 12 %, insbesondere bevorzugt maximal 8 % und ganz besonders bevorzugt maximal 5 % beziehungsweise maximal 4 % der wiederkehrenden Einheiten aus Hexamethylendiamin und linearer aliphatischer Dicarbonsäure durch die äquivalente Menge von Einheiten ersetzt sein kann, die sich von einem Lactam beziehungsweise einer ω-Aminocarbonsäure mit 6 bis 12 C-Atomen herleiten,
   2) 40 bis 1 Gew.-Teile, vorzugsweise 35 bis 2 Gew.-Teile, besonders bevorzugt 32 bis 3 Gew.-Teile und insbesondere bevorzugt 30 bis 4 Gew.-Teile eines olefinischen Copolymers als Schlagzähmodifier,
   wobei die Summe der Gew.-Teile von 1) und 2) 100 ergibt; sowie
II. eine zweite Schicht (Schicht II) aus einer Formmasse, die zu mindestens 60 Gew.-%, vorzugsweise zu mindestens 70 Gew.-%, besonders bevorzugt zu mindestens 80 Gew.%, insbesondere bevorzugt zu mindestens 90 Gew.-% und ganz besonders bevorzugt zu mindestens 95 Gew.-% aus einem Fluorpolymer besteht.

Als lineare aliphatische Dicarbonsäure mit 8 bis 19 C-Atomen kommen folgende in Frage: Octandisäure (Korksäure; C₈), Nonandisäure (Azelainsäure; C₉), Decandisäure (Sebacinsäure; C₁₀), Undecandisäure (C₁₁), Dodecandisäure (C₁₂), Tridecandisäure (C₁₃), Tetradecandisäure (C₁₄), Pentadecandisäure (C₁₅), Hexadecandisäure (C₁₆), Heptadecandisäure (C₁₇), Octadecandisäure (C₁₈) und Nonadecandisäure (C₁₉).

Anspruchsgemäß kann optional ein Teil des Hexamethylendiamins durch ein anderes Diamin ersetzt sein. Hier ist prinzipiell jedes Diamin geeignet; als Beispiel seien folgende Diamine genannt: 1,10-Decandiamin, 1,12-Dodecandiamin, m-Xylylendiamin, p-Xylylendiamin, Bis-(4-aminocyclohexyl)-methan, 2-Methyl-1,5-pentandiamin sowie 1,4-Bis-aminomethyl-cyclohexan. Selbstverständlich können auch Mischungen derartiger Diamine eingesetzt werden. Vorzugsweise wird jedoch neben Hexamethylendiamin kein weiteres Diamin eingesetzt.

Anspruchsgemäß kann optional auch ein Teil der Terephthalsäure durch eine andere aromatische Dicarbonsäure oder durch 1,4-Cyclohexandicarbonsäure ersetzt werden. Hier ist prinzipiell jede aromatische Dicarbonsäure geeignet; als Beispiel seien folgende Dicarbonsäuren genannt: Isophthalsäure, 4,4'-Diphenyldicarbonsäure, 4,4'-Diphenyletherdicarbonsäure, 2,6-Naphthalindicarbonsäure, 1,4-Naphthalindicarbonsäure sowie 1,5-Naphthalindicarbonsäure. Selbstverständlich können auch Mischungen derartiger Dicarbonsäuren eingesetzt werden. Vorzugsweise wird jedoch neben Terephthalsäure keine weitere aromatische Dicarbonsäure und/oder keine 1,4-Cyclohexandicarbonsäure eingesetzt. Genauso kann anspruchsgemäß optional ein Teil der wiederkehrenden Einheiten aus Hexamethylendiamin und linearer aliphatischer Dicarbonsäure durch ein Lactam bzw. eine ω-Aminocarbonsäure mit 6 bis 12 C-Atomen ersetzt werden. Die wiederkehrende Einheit aus Hexamethylendiamin und linearer aliphatischer Dicarbonsäure entspricht hierbei einer Einheit, die von einem Lactam bzw. einer ω-Aminocarbonsäure herrührt. Lactame bzw. ω-Aminocarbonsäuren mit 6 bis 12 C-Atomen sind beispielsweise Caprolactam, Capryllactam, Undecanolactam, ω-Aminoundecansäure, Laurinlactam sowie ω-Aminododecansäure. Hierbei sind Lactame bzw. ω-Aminocarbonsäuren mit 11 oder 12 C-Atomen bevorzugt. Vorzugsweise wird jedoch neben Hexamethylendiamin und linearer aliphatischer Dicarbonsäure kein Lactam beziehungsweise keine ω-Aminocarbonsäure eingesetzt.

Die Zusammensetzung des teilaromatischen Copolyamids wird vorteilhafterweise so gewählt, dass sein Kristallitschmelzpunkt Tₘ gemäß ISO 11357, gemessen beim 2. Aufheizen, im Bereich von 220 bis 300 °C, vorzugsweise im Bereich von 230 bis 295 °C und besonders bevorzugt im Bereich von 240 bis 290 °C liegt. Wenn mehrere Schmelzpeaks auftreten, wird Tₘ aus dem Hauptschmelzpeak ermittelt.

Das Copolyamid wird in der Regel durch Schmelzepolykondensation hergestellt. Entsprechende Verfahren sind Stand der Technik. Alternativ kann auch jedes andere bekannte Polyamid-Syntheseverfahren verwendet werden.

Eine notwendigerweise äquimolare Kombination von Hexamethylendiamin und Terephthalsäure liegt dann vor, wenn gewährleistet ist, dass diese Monomeren im Molverhältnis 1 : 1 reagieren können. Hierbei kann berücksichtigt werden, dass Hexamethylendiamin relativ flüchtig ist und aus diesem Grunde während der Polykondensation Verluste auftreten können, die durch eine erhöhte Einwaage ausgeglichen werden müssen. Es kann darüber hinaus nötig sein, in geringem Umfang von der exakten Stöchiometrie abzuweichen, um ein bestimmtes Endgruppenverhältnis einzustellen. Gleiches gilt unter 1)ß) für die notwendigerweise äquimolare Kombination aus Hexamethylendiamin und einer linearen aliphatischen Dicarbonsäure mit 8 bis 19 C-Atomen.

In einer bevorzugten Ausführungsform beträgt beim teilaromatischen Polyamid das Verhältnis der Aminoendgruppen zur Summe aus Amino- und Carboxylendgruppen 0,3 bis 0,7 und besonders bevorzugt 0,35 bis 0,65. Der Anteil der Aminoendgruppen kann durch Regelung der Polykondensation nach Methoden eingestellt werden, die dem Fachmann bekannt sind. Die Regelung kann beispielsweise durch Variation des Verhältnisses von eingesetztem Diamin zu eingesetzter Dicarbonsäure, durch Zusatz einer Monocarbonsäure oder durch Zusatz eines Monoamins erfolgen. Darüber hinaus kann der Anteil an Aminoendgruppen auch dadurch eingestellt werden, dass man zwei Copolyamide, von denen eines reich an Aminoendgruppen und das andere arm an Aminoendgruppen ist, als Granulat oder in der Schmelze mischt.

Der Aminogruppengehalt kann durch Titration einer Lösung des Copolyamids in m-Kresol mittels Perchlorsäure bestimmt werden. Die Bestimmung des Carboxylgruppengehalts kann durch Titration einer Lösung des Copolyamids in o-Kresol mittels KOH in Ethanol erfolgen. Diese Methoden sind dem Fachmann geläufig.

Der Schlagzähmodifier ist insbesondere ein olefinisches Copolymer, das Einheiten der folgenden Monomere enthält:
a) 20 bis 99,9 Gew.-% und vorzugsweise 30 bis 99,7 Gew.-% eines oder mehrerer α-Olefine mit 2 bis 12 C-Atomen,
b) 0 bis 50 Gew.-% einer oder mehrerer acrylischer Verbindungen, ausgewählt aus
   - Acrylsäure bzw. Methacrylsäure bzw. deren Salzen und
   - Estern von Acrylsäure bzw. Methacrylsäure mit einem C₁- bis C₁₂-Alkohol, wobei epoxidgruppenhaltige Ester wie Glycidylacrylat und Glycidylmethacrylat ausgenommen sind,
c) 0,1 bis 50 Gew.-% eines olefinisch ungesättigten Epoxids oder Dicarbonsäureanhydrids,
wobei die Gew.-%-Angaben sich auf das olefinische Copolymer beziehen und in der Summe maximal 100 betragen können. Es ist zu berücksichtigen, dass daneben Einheiten vorliegen können, die sich von weiteren Comonomeren herleiten, beispielsweise von Styrol oder einem unkonjugierten Dien.

Wenn die Komponente c) aus Einheiten besteht, die sich von einem ungesättigten Dicarbonsäureanhydrid herleiten, sind diese vorzugsweise zu 0,1 bis 8 Gew.-% und besonders bevorzugt zu 0,3 bis 5 Gew.-% vorhanden.

Wenn die Komponente c) aus Einheiten besteht, die sich von einem olefinisch ungesättigten Epoxid herleiten, enthält die acrylische Verbindung gemäß b) weder Acrylsäure noch Methacrylsäure.

In einer ersten Ausführungsform ist der Schlagzähmodifier ein olefinisches Copolymer, das folgende Monomereinheiten enthält:
- 35 bis 94,9 Gew.-%, vorzugsweise 40 bis 90 Gew.-% und besonders bevorzugt 45 bis 85 Gew.-% Monomereinheiten auf Basis von Ethen,
- 5 bis 65 Gew.-%, vorzugsweise 10 bis 60 Gew.-% und besonders bevorzugt 15 bis 55 Gew.-% Monomereinheiten auf Basis eines 1-Alkens mit 4 bis 8 C-Atomen,
- 0 bis 10 Gew.-% Monomereinheiten auf Basis eines anderen Olefins sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt.

Beim olefinischen Copolymer kommen als 1-Alken mit 4 bis 8 C-Atomen folgende Verbindungen in Frage: 1-Buten, 1-Penten, 1-Hexen, 1-Hepten und 1-Octen. Selbstverständlich können sich die Monomereinheiten auf Basis eines 1-Alkens mit 4 bis 8 C-Atomen auch von Mischungen dieser Verbindungen herleiten.

Das andere Olefin, dessen Monomereinheiten im olefinischen Copolymer zu 0 bis 10 Gew.-% enthalten sein können, ist von der Art her nicht limitiert. Es kann beispielsweise ein unkonjugiertes Dien sein, ein Monoen wie Propen, 4-Methylpenten-1 oder Styrol oder eine Mischung hiervon.

In einer ersten Variante ist das andere Olefin, dessen Monomereinheiten im olefinischen Copolymer zu 0 bis 10 Gew.-% enthalten sein können, kein unkonjugiertes Dien.

In einer zweiten Variante ist dieses andere Olefin kein Styrol und/oder kein Propen.

In einer dritten Variante enthält das olefinische Copolymer nur Monomereinheiten, die sich von Ethen, einem 1-Alken mit 4 bis 8 C-Atomen und einem aliphatisch ungesättigten Dicarbonsäureanhydrid herleiten.

In einer vierten Variante ist das 1-Alken mit 4 bis 8 C-Atomen 1-Buten.

In einer fünften Variante ist das 1-Alken mit 4 bis 8 C-Atomen 1-Hexen.

In einer sechsten Variante ist das 1-Alken mit 4 bis 8 C-Atomen 1-Octen.

Diese Varianten können ohne Einschränkung miteinander kombiniert werden.

Das aliphatisch ungesättigte Dicarbonsäureanhydrid kann beispielsweise Maleinsäureanhydrid sein, jedoch sind auch andere entsprechende Verbindungen wie etwa Aconitsäureanhydrid, Citraconsäureanhydrid oder Itaconsäureanhydrid geeignet.

Das anspruchsgemäße olefinische Copolymer kann auf bekannte Weise hergestellt werden, wobei das aliphatisch ungesättigte Dicarbonsäureanhydrid oder eine Vorstufe hiervon, beispielsweise die entsprechende Säure oder ein Halbester, thermisch oder bevorzugt radikalisch mit einem vorgebildeten Copolymer umgesetzt wird. Das aliphatisch ungesättigte Dicarbonsäureanhydrid kann hierbei auch in Kombination mit anderen Monomeren umgesetzt werden, beispielweise mit Fumarsäuredibutylester oder Styrol. Anspruchsgemäße olefinische Copolymere sind in verschiedenen Typen kommerziell erhältlich.

In einer zweiten Ausführungsform ist der Schlagzähmodifier ein olefinisches Copolymer, das folgende Monomereinheiten enthält:
- 35 bis 94,9 Gew.-%, vorzugsweise 40 bis 90 Gew.-% und besonders bevorzugt 45 bis 85 Gew.-% Monomereinheiten auf Basis von Ethen,
- 5 bis 65 Gew.-%, vorzugsweise 10 bis 60 Gew.-% und besonders bevorzugt 15 bis 55 Gew.-% Monomereinheiten auf Basis von Propen,
- 0 bis 10 Gew.-% Monomereinheiten auf Basis eines anderen Olefins, beispielsweise eines unkonjugierten Diens sowie
- 0,1 bis 2,5 Gew.-% Monomereinheiten auf Basis eines aliphatisch ungesättigten Dicarbonsäureanhydrids,
wobei die einzelnen Anteile so gewählt werden, dass die Summe dieser Gew.-%-Angaben 100 ergibt.

In einer dritten Ausführungsform ist der Schlagzähmodifier ein hydriertes und säureanhydridmodifiziertes Blockcopolymer mit mindestens einem polyvinylaromatischen Block A und mindestens einem Polyolefinblock B. Die Blöcke können linear oder sternförmig angeordnet sein, beispielsweise als Strukturen der Art A-B, A-B-A, B-A-B, A-B-A-B, A-B-A-B-A, B-A-B-A-B, (A)B₃, (B)A₃, (A)(B-A)₃, (B)(A-B)₃ usw., wobei das zahlenmittlere Molekulargewicht dieser Blockcopolymere im Bereich von etwa 10.000 bis etwa 800.000 und vorzugsweise im Bereich von etwa 20.000 bis etwa 500.000 liegt. Der Anteil an vinylaromatischer Verbindung im Blockcopolymer beträgt vorzugsweise 10 bis 70 Gew.-% und besonders bevorzugt 10 bis 55 Gew.-%. Die kautschukartigen Polyolefinblöcke B enthalten beispielsweise Ethylen/Propylen-, Ethylen/Butylen- oder Ethylen/Pentylen-Einheiten; sie werden erhalten durch die Polymerisation von konjugierten Dienen und insbesondere von Butadien, Isopren, 1,3-Pentadien, 2,3-Dimethylbutadien oder Mischungen hiervon sowie durch anschließende selektive Hydrierung. Hierbei werden mindestens 80 % der aliphatischen Doppelbindungen des Anteils an polymerisiertem Dien, vorzugsweise mindestens 90 % und besonders bevorzugt mindestens 94 % hydriert. Die zur Herstellung des polyvinylaromatischen Blocks eingesetzte vinylaromatische Verbindung ist üblicherweise Styrol; es kann aber auch beispielsweise α-Methylstyrol oder dergleichen eingesetzt werden. Das hydrierte Blockcopolymer enthält 0,1 bis 8 Gew.-% und vorzugsweise 0,3 bis 5 Gew.-% Bernsteinsäureanhydridgruppen, die durch Reaktion mit einer ungesättigten Dicarbonsäure oder deren Anhydrid wie Maleinsäureanhydrid, Citraconsäure, Itaconsäure oder dergleichen entweder vor oder vorzugsweise nach der Hydrierung eingeführt werden. Die Herstellung derartiger säureanhydridmodifizierter, hydrierter Vinylaromat/konjugiertes Dien-Blockcopolymere ist Stand der Technik; geeignete Typen sind kommerziell erhältlich, beispielsweise unter dem Handelsnamen Kraton^{®} FG1901X. Dies ist ein lineares Triblockcopolymer vom Typ SEBS (Styrol-Ethylen/Butylen-Styrol) mit einem Polystyrolanteil von 30 Gew.-% und einem Gehalt an Bernsteinsäureanhydridgruppen von 1,4-2 Gew.-%.

In einer vierten Ausführungsform ist der Schlagzähmodifier eine Mischung aus
- 5 bis 95 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁- bis C₁₂-Alkohol, wobei epoxidgruppenhaltige Ester ausgenommen sind, und
   c) 0,1 bis 50 Gew.-% eines olefinisch ungesättigten Epoxids,
   wobei die Gew.-%-Angaben sich auf das olefinische Copolymer beziehen und in der Summe maximal 100 betragen, und
- 95 bis 5 Gew.-% eines olefinischen Copolymers, das Einheiten der folgenden Monomere enthält:
   a) 42 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁- bis C₁₂-Alkohol, wobei epoxidgruppenhaltige Ester ausgenommen sind, und
   c) 0,1 bis 8 Gew.-% eines olefinisch ungesättigten Dicarbonsäureanhydrids,
   wobei die Gew.-%-Angaben sich auf das olefinische Copolymer beziehen und in der Summe maximal 100 betragen.

Das α-Olefin mit 2 bis 12 C-Atomen ist beispielweise ausgewählt aus Ethen, Propen, 1-Buten, 1-Penten, 4-Methylpent-1-en, 1-Hexen, 1-Hepten, 1-Octen, 1-Nonen, 1-Decen, 1-Undecen und 1-Dodecen, wobei Ethen bevorzugt ist.

Als Beispiele für Ester der Acrylsäure oder Methacrylsäure lassen sich insbesondere Methylacrylat, Ethylacrylat, n-Butylacrylat, Isobutylacrylat, 2-Ethylhexylacrylat, Methylmethacrylat, Ethylmethacrylat, n-Butylmethacrylat und 2-Ethylhexylmethacrylat nennen.

Beispiele für olefinisch ungesättigte Epoxide sind insbesondere Glycidylester und Glycidylether, wie Glycidylacrylat, Glycidylmethacrylat, Glycidylmaleat, Glycidylitaconat, Vinylglycidylether und Allylglycidylether.

Beispiele für olefinisch ungesättigte Dicarbonsäureanhydride sind Maleinsäureanhydrid, Itaconsäureanhydrid, Citraconsäureanhydrid, 2,3-Dimethylmaleinsäureanhydrid und (2.2.2)-Bicyclooct-5-en-2,3-dicarbonsäureanhydrid.

In einer fünften Ausführungsform ist der Schlagzähmodifier eine Mischung aus
- 70 bis 99 Gew.-% des Schlagzähmodifiers der ersten Ausführungsform und
- 1 bis 30 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁-bis C₁₂-Alkohol, wobei epoxidgruppenhaltige Ester ausgenommen sind, und
   c) 0,1 bis 50 Gew.-% eines olefinisch ungesättigten Epoxids,
   wobei die Gew.-%-Angaben sich auf das olefinische Copolymer beziehen und in der Summe maximal 100 betragen.

Die Details des hier eingesetzten olefinischen Copolymers sind die gleichen wie bei der vierten Ausführungsform beschrieben.

In einer sechsten Ausführungsform ist der Schlagzähmodifier eine Mischung aus
- 70 bis 99 Gew.-% des Schlagzähmodifiers der zweiten Ausführungsform und
- 1 bis 30 Gew.-% eines olefinischen Copolymers, das Einheiten der folgenden Monomere enthält:
   a) 20 bis 99,9 Gew.-% eines oder mehrerer α-Olefine mit 2 bis 12 C-Atomen,
   b) 0 bis 50 Gew.-% Ester der Acrylsäure oder Methacrylsäure mit einem C₁-bis C₁₂-Alkohol, wobei epoxidgruppenhaltige Ester ausgenommen sind, und
   c) 0,1 bis 50 Gew.-% eines olefinisch ungesättigten Epoxids,
wobei die Gew.-%-Angaben sich auf das olefinische Copolymer beziehen und in der Summe maximal 100 betragen.

Die Details des hier eingesetzten Copolymers sind die gleichen wie bei der vierten Ausführungsform beschrieben.

In einer siebten Ausführungsform ist der Schlagzähmodifier eine Mischung aus
- 50 bis 99 Gew.-% des Schlagzähmodifiers der ersten Ausführungsform und
- 1 bis 50 Gew.-% des hydrierten und säureanhydridmodifizierten Blockcopolymers der dritten Ausführungsform.

In einer achten Ausführungsform ist der Schlagzähmodifier eine Mischung aus
- 50 bis 99 Gew.-% des Schlagzähmodifiers der zweiten Ausführungsform und
- 1 bis 50 Gew.-% des hydrierten und säureanhydridmodifizierten Blockcopolymers der dritten Ausführungsform.

Diese Ausführungsformen sind nur beispielhaft. Im Rahmen der Erfindung können auch andere, hier nicht genannte Schlagzähmodifier eingesetzt werden. Hierbei ist die erste Ausführungsform besonders bevorzugt, da derartige Formmassen eine besonders hohe Wärmealterungsbeständigkeit besitzen. Bevorzugt sind darüber hinaus auch die fünfte und die siebte Ausführungsform, die den Schlagzähmodifier der ersten Ausführungsform ebenfalls enthalten.

Die erfindungsgemäße Formmasse enthält neben den Komponenten 1) und 2) gegebenenfalls weitere Zusätze, die die Balance zu 100 Gew.-% ergeben, und vorzugsweise mindestens 0,01 Gew.-% hiervon. Diese weiteren Zusätze sind beispielsweise:
a) Stabilisatoren,
b) andere Polymere,
c) Weichmacher,
d) Pigmente und/oder Farbstoffe,
e) Zusätze, die die elektrische Leitfähigkeit erhöhen und
f) Verarbeitungshilfsmittel.

In einer bevorzugten Ausführungsform enthält die Formmasse eine wirksame Menge eines kupferhaltigen Stabilisators. Dies ist insbesondere eine Kupferverbindung, die in der Polyamidmatrix löslich ist. Vorzugsweise wird die Kupferverbindung mit einem Alkalimetallhalogenid kombiniert.

In bestimmten Ausführungsformen ist der Stabilisator ein Kupfer(I)-Salz, z. B. Kupferacetat, Kupferstearat, eine organische Kupferkomplex-Verbindung wie beispielsweise Kupferacetylacetonat, ein Kupferhalogenid oder dergleichen in Kombination mit einem Alkalimetallhalogenid.

In bestimmten Ausführungsformen umfasst der kupferhaltige Stabilisator ein Kupferhalogenid, ausgewählt aus Kupferiodid und Kupferbromid und ein Alkalimetallhalogenid ausgewählt aus den Iodiden und Bromiden von Lithium, Natrium und Kalium.

Vorzugsweise wird der kupferhaltige Stabilisator so dosiert, dass die Formmasse 20 bis 2000 ppm Kupfer, besonders bevorzugt 30 bis 1500 ppm Kupfer und insbesondere bevorzugt 40 bis 1000 ppm Kupfer enthält.

Weiterhin ist bevorzugt, dass der kupferhaltige Stabilisator so zusammengesetzt ist, dass das Gewichtsverhältnis von Alkalimetallhalogenid zu Kupferverbindung im Bereich von 2,5 bis 12 und besonders bevorzugt im Bereich von 6 bis 10 liegt. Die Kombination von Alkalimetallhalogenid und Kupferverbindung ist im Allgemeinen in der Formmasse zu etwa 0,01 Gew.-% bis etwa 2,5 Gew.-% enthalten.

Der kupferhaltige Stabilisator bietet Schutz gegen langfristige Wärmealterung, beispielsweise bei Anwendungen unter der Motorhaube eines Automobils.

In einer weiteren bevorzugten Ausführungsform enthält die Formmasse eine wirksame Menge eines Oxidationsstabilisators und besonders bevorzugt eine wirksame Menge eines Oxidationsstabilisators in Kombination mit der wirksamen Menge eines kupferhaltigen Stabilisators. Geeignete Oxidationsstabilisatoren sind beispielweise aromatische Amine, sterisch gehinderte Phenole, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthält die Formmasse etwa 0,01 bis etwa 2 Gew.-% und bevorzugt etwa 0,1 bis etwa 1,5 Gew.-% eines Oxidationsstabilisators.

Darüber hinaus kann die Formmasse auch einen UV-Stabilisator bzw. einen Lichtstabilisator vom HALS-Typ enthalten. Geeignete UV-Stabilisatoren sind in erster Linie organische UV-Absorber, beispielsweise Benzophenonderivate, Benzotriazolderivate, Oxalanilide oder Phenyltriazine. Lichtstabilisatoren vom HALS-Typ sind Tetramethylpiperidinderivate; es handelt sich hier um Inhibitoren, die als Radikalfänger wirken. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Die Formmasse kann zusätzlich einen Hydrolysestabilisator enthalten wie etwa ein monomeres, oligomeres oder polymeres Carbodiimid oder ein Bisoxazolin.

Andere Polymere, die als Zusatz in der Formmasse enthalten sein können, sind beispielsweise aliphatische Polyamide, Polyetheramide oder Polytetrafluorethylen (PTFE).

Geeignete aliphatische Polyamide sind beispielsweise PA46, PA66, PA68, PA610, PA612, PA613, PA410, PA412, PA810, PA1010, PA1012, PA1013, PA1014, PA1018, PA1212, PA6, PA11 und PA12 sowie Copolyamide, die sich von diesen Typen herleiten. Vorzugsweise enthält der Polyamidanteil der Formmasse, der sich aus dem teilaromatischen Copolyamid, gegebenenfalls aliphatischem Polyamid sowie gegebenenfalls Polyetheramid zusammensetzt, weniger als 10 Gew.-%, besonders bevorzugt weniger als 8 Gew.-%, insbesondere bevorzugt weniger als 5 Gew.-% und ganz besonders bevorzugt weniger als 3 Gew.-% aliphatisches Polyamid oder vorzugsweise weniger als 10 Gew.-%, besonders bevorzugt weniger als 8 Gew.-%, insbesondere bevorzugt weniger als 5 Gew.-% und ganz besonders bevorzugt weniger als 3 Gew.-% an der Summe aus aliphatischem Polyamid und Polyetheramid.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Geeignete Pigmente und/oder Farbstoffe sind beispielsweise Ruß, Eisenoxid, Zinksulfid, Ultramarin, Nigrosin, Perlglanzpigmente und Metallflitter.

Zusätze, die die elektrische Leitfähigkeit erhöhen, sind beispielsweise Leitfähigkeitsruß oder Carbon Nanotubes.

Geeignete Verarbeitungshilfsmittel sind beispielsweise Paraffine, Fettalkohole, Fettsäureamide, Stearate wie Calciumstearat, Paraffinwachse, Montanate oder Polysiloxane.

Die Formmasse wird aus den einzelnen Bestandteilen auf dem Fachmann bekannte Weise durch Mischen in der Schmelze hergestellt.

Das für die Schicht II verwendete Fluorpolymer kann beispielsweise ein Polyvinylidenfluorid (PVDF), ein Copolymer auf Basis von Vinylidenfluorid, das bis zu 40 Gew.-% andere Monomere wie beispielsweise Trifluorethylen, Chlortrifluorethylen, Ethylen, Propen und Hexafluorpropen enthält, ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein. Diese Polymere sind dem Fachmann bekannt und in einer Vielzahl von Handelstypen kommerziell erhältlich, so dass sich eine nähere Beschreibung erübrigt.

Das Fluorpolymer der Schicht II ist vorzugsweise haftungsmodifiziert, das heißt, dass funktionelle Gruppen vorhanden sind, die mit Aminogruppen des Polyamids reagieren können und somit eine Phasenanbindung ermöglichen. Eine derartige Haftungsmodifizierung ist generell auf zwei Wegen möglich:
- Entweder enthält das Fluorpolymer eingebaute funktionelle Gruppen, beispielsweise Säureanhydridgruppen oder Carbonatgruppen, wie in der US 5 576 106, der US-A-2003148125, der US-A-2003035914, der US-A-2002104575, der JP-A-10311461, der EP-A-0 726 293, der EP-A-0 992 518 oder der WO 9728394 beschrieben;
- oder die Fluorpolymer-Formasse enthält ein mit dem Fluorpolymer mischbares oder zumindest verträgliches Polymeres, das funktionelle Gruppen enthält. Derartige Systeme sind beispielsweise in der US 5 510 160 sowie in der US 5 554 426 offenbart, auf die hiermit ausdrücklich Bezug genommen wird. Das modifizierte Fluorpolymer der US 5 510 160 besteht aus
- 97,5 bis 50 Gew.-%, bevorzugt 97,5 bis 80 Gew.-% und besonders bevorzugt 96 bis 90 Gew.-% PVDF sowie
- 2,5 bis 50 Gew.-%, bevorzugt 2,5 bis 20 Gew.-% und besonders bevorzugt 4 bis 10 Gew.-% eines Acrylatcopolymers, das mindestens folgende Grundbausteine aufweist:
   i) 14 bis 85 Gew.-% Esterbausteine,
   ii) 0 bis 75 Gew.-% Imidbausteine,
   iii) 0 bis 15 Gew.-% Carbonsäurebausteine und
   iiii) 7 bis 20 Gew.-Teile Carbonsäureanhydridbausteine.

Die Fluorpolymer-Formmasse kann darüber hinaus übliche Hilfs- und Zusatzstoffe enthalten.

Der erfindungsgemäße Mehrschichtverbund kann darüber hinaus weitere Schichten enthalten, beispielsweise eine weitere Schicht I, eine weitere Schicht II, eine Schicht aus einer Formmasse auf Basis eines aliphatischen Polyamids, eine Schicht aus einer Formmasse auf Basis eines thermoplastischen Polyesters oder eines Ethylen-Vinylalkohol-Copolymers (EVOH) und/oder eine Haftvermittlerschicht.

Die Formmasse auf Basis eines aliphatischen Polyamids enthält zu mindestens 40 Gew.-%, vorzugsweise zu mindestens 50 Gew.-%, besonders bevorzugt zu mindestens 60 Gew.% und insbesondere bevorzugt zu mindestens 70 Gew.-% ein aliphatisches Polyamid; sie kann darüber hinaus einen Schlagzähmodifier sowie übliche Zusätze enthalten, beispielsweise der Art wie für die Formmasse der Schicht I beschrieben. Geeignete aliphatische Polyamide sind beispielsweise PA46, PA66, PA68, PA610, PA612, PA613, PA410, PA412, PA810, PA1010, PA1012, PA1013, PA1014, PA1018, PA1212, PA6, PA11 und PA12 sowie Copolyamide, die sich von diesen Typen herleiten. Hierbei sind aliphatische Polyamide bevorzugt, deren Kristallitschmelzpunkt Tₘ oberhalb von 190 °C, besonders bevorzugt oberhalb von 200 °C und insbesondere bevorzugt oberhalb von 210 °C liegt.

Der erfindungsgemäße Mehrschichtverbund kann als flächiger Verbund vorliegen, beispielsweise als Platte oder als Folie, etwa als Verpackungsfolie, wobei die Sperrwirkung des Fluorpolymers für Gase wie z. B. Sauerstoff und Kohlendioxid ausgenutzt wird oder als Antiweartape bei flexiblen Rohren für die Offshore-Förderung.

In einer bevorzugten Ausführungsform ist der erfindungsgemäße Mehrschichtverbund ein Hohlkörper, in erster Linie ein Rohr oder ein Behälter. Darunter fallen beispielsweise Kraftstoffleitungen, Hydraulikleitungen, Bremsleitungen, Kupplungsleitungen oder Kühlflüssigkeitsleitungen, Bremsflüssigkeitsbehälter oder Kraftstoffbehälter. Weitere Anwendungen sind beispielsweise Liner für starre oder flexible Rohre in der Öl- oder Gasförderindustrie oder Leitungen von Umbilicals, in denen heiße Flüssigkeiten gefördert werden. Wenn die Innenschicht in Kontakt mit Ottokraftstoff oder Biodiesel steht, enthält sie vorzugsweise keinen Kupferstabilisator.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen spezifischen Oberflächenwiderstand von maximal 10⁹ Ω/square. Die Messmethode zur Bestimmung des Widerstands von mehrschichtigen Rohren ist in der SAE J 2260 vom November 2004 erläutert.

Bei der Ausführung des erfindungsgemäßen Mehrschichtverbundes als Hohlkörper oder Hohlprofil (z. B. Rohr) kann dieser noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf den Mehrschichtverbund aufgebracht werden, beispielsweise mittels Extrusion über einen Querspritzkopf oder dadurch, dass ein vorgefertigter Elastomerschlauch über das fertig extrudierte Mehrschichtrohr geschoben wird. In der Regel besitzt die Ummantelung eine Dicke von 0,1 bis 4 mm und bevorzugt von 0,2 bis 3 mm.

Geeignete Elastomere sind beispielsweise Chloroprenkautschuk, Ethylen/Propylen-Kautschuk (EPM), Ethylen/Propylen/Dien-Kautschuk (EPDM), Epichlorhydrinkautschuk (ECO), chloriertes Polyethylen, Acrylatkautschuk, chlorsulfoniertes Polyethylen, Siliconkautschuk, Santopren, Polyetheresteramide oder Polyetheramide.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. in der US 5 554 425 beschrieben.

In der nachfolgenden Tabelle werden beispielhaft mögliche Schichtenkonfigurationen genannt. Diese Beispiele sind nur zur Illustration gedacht und sollen keine Einschränkungen des Umfangs der Erfindung darstellen. Die genannten Schichtenkonfigurationen gelten generell unabhängig von der Geometrie, also auch für Folien. Sie gelten aber auch speziell für Hohlkörper wie Hohlprofile, beispielsweise Rohre, oder Behälter; in diesem Fall ist die Schicht gemäß a) die Außenschicht.

| **Konfiguration** | **Schichtenabfolge** |
|---|---|
| 1 | a) Schicht I |
| | b) Schicht II |
| 2 | a) Schicht I |
| | b) Schicht II |
| | c) Schicht aus einer Formmasse auf Basis eines aliphatischen Polyamids |
| 3 | a) Schicht aus einer Formmasse auf Basis eines aliphatischen Polyamids |
| | b) Schicht II |
| | c) Schicht I |
| 4 | a) Schicht I |
| | b) Haftvermittlerschicht beispielsweise gemäß US 5 500 263 |
| | c) Schicht II (nicht haftend modifiziert) |
| | d) Haftvermittlerschicht beispielsweise gemäß US 5 500 263 |
| | e) Schicht I |
| 5 | a) Schicht I |
| | b) Schicht II |
| | c) Schicht I |
| 6 | a) Schicht I |
| | b) Schicht aus einer EVOH-Formmasse |
| | c) Schicht I |
| | d) Schicht II |
| 7 | a) Schicht I |
| | b) Schicht II |
| | c) Schicht I (elektrisch leitfähig ausgerüstet) |
| 8 | a) Schicht I |
| | b) Schicht II |
| | c) Schicht aus einer Formmasse auf Basis eines aliphatischen Polyamids (elektrisch leitfähig ausgerüstet) |
| 9 | a) Schicht I |
| | b) Haftvermittlerschicht beispielsweise gemäß US 6 355 358 |
| | c) Schicht aus einer Formmasse auf Basis eines thermoplastischen Polyesters |
| | d) Haftvermittlerschicht beispielsweise gemäß US 6 355 358 |
| | e) Schicht II |
| 10 | a) Schicht I |
| | b) Schicht II |
| | c) Schicht I |
| | d) Schicht I (elektrisch leitfähig ausgerüstet) |
| 11 | a) Schicht I |
| | b) Schicht II (haftend modifiziert) |
| | c) Schicht II (nicht haftend modifiziert; elektrisch leitfähig ausgerüstet) |
| 12 | a) Elastomerschicht |
| | b) Schicht I |
| | c) Schicht II |
| | d) Schicht I |
| 13 | a) Elastomerschicht |
| | b) Schicht I |
| | c) Schicht II (haftend modifiziert) |
| | e) Schicht II (nicht haftend modifiziert; elektrisch leitfähig ausgerüstet) |

Die erfindungsgemäßen Verbunde weisen eine hohe Wärmeformbeständigkeit, eine sehr gute Schlagfestigkeit und eine hohe Reißdehnung auf. Darüber hinaus hat sich gezeigt, dass aus der erfindungsgemäß verwendeten Formmasse der Schicht I nur eine sehr geringe Menge an Oligomeren ausgewaschen wird, wenn diese als innerste Schicht vorliegt; es treten somit keine Verstopfungen bei der Brennstoffzuführung zum Motor auf. Die Sperrwirkung erfindungsgemäßer Rohre gegenüber Kraftstoffkomponenten ist sehr gut.

Die Erfindung soll nachfolgend beispielhaft erläutert werden.

In den Beispielen wurden folgende Materialien eingesetzt:

| | |
|---|---|
| **PA6T/612:** | siehe Herstellungsbeispiel 1 |
| **Farbbatch:** | Mischung aus 80 Gew.-% PA12 und 20 Gew.-% Ruß |
| **TAFMER^{®} MH7010:** | ein säureanhydridmodifizierter Ethylen-Butylen-Kautschuk der Firma Mitsui Chemicals |
| **Calciumstearat:** | Verarbeitungshilfsmittel |
| **Polyad^{®} PB201 Jodide:** | kupferhaltiger Stabilisator auf Basis von Kupferiodid und Alkalihalogenid |
| **Naugard^{®} 445:** | Oxidationsstabilisator (aromatisches Amin) |
| **Haftendes PVDF:** | Mischung gemäß EP-A-0 673 762 aus 95 Gew.-% eines handelsüblichen PVDF und 5 Gew.-% eines Polyglutarimids, das aus folgenden Grundbausteinen aufgebaut ist: |
| | 57 Gew.-% hergeleitet von Methylmethacrylat, |
| | 30 Gew.-% vom N-Methylglutarimid-Typ, |
| | 3 Gew.-% hergeleitet von Methacrylsäure und |
| | 10 Gew.-% vom Glutaranhydrid-Typ |
| | (hergestellt durch Umsetzung von Methylmethacrylat mit einer wässrigen Lösung von Methylamin in der Schmelze) |
| **NEOFLON™ EP-7000:** | modifiziertes ETFE |
| **HI-PA6T/612:** | die erfindungsgemäß verwendete schlagzähmodifizierte PA6T/612-Formmasse |

Herstellungsbeispiel 1 (PA6T/612 50 : 50; erfindungsgemäß):
In einem Polykondensationskessel wurden 12,621 kg Hexamethylendiamin, 9,021 kg Terephthalsäure, 13,356 kg Dodecandisäure, 15,000 kg destilliertes Wasser und 3,53 g einer 50-gewichtsprozentigen wässrigen Lösung von hypophosphoriger Säure vorgelegt. Die Einsatzstoffe wurden bei 180 °C aufgeschmolzen und bei 225 °C/22 bar 3 Stunden gerührt. Unter kontinuierlicher Entspannung auf 10 bar wurde auf 300 °C aufgeheizt und bei dieser Temperatur weiter entspannt. Bei Erreichen von 0,5 bar wurde der Kessel entleert und das Produkt granuliert. Das Granulat wurde in einem Taumeltrockner nachkondensiert und so auf das gewünschte Molekulargewicht gebracht.

### Kristallitschmelzpunkt Tₘ: 278 °C (Hauptpeak)

### Herstellung der erfindungsgemäß verwendeten Formmasse (HI-PA6T612):

Eingesetzt wurden 65,38 Gew.-Teile des hergestellten PA6T/612, 30 Gew.-Teile TAFMER MH7010, 2,5 Gew.-Teile Farbbatch, 1,2 Gew.-Teile Polyad PB201 Iodide, 0,6 Gew.-Teile Naugard 445 und 0,32 Gew.-Teile Calciumstearat. Die Formmasse wurde aus den einzelnen Bestandteilen durch Schmelzemischen in einem knetenden Aggregat hergestellt, als Strang ausgetragen, granuliert und getrocknet.

Referenz: An einer Monorohrextrusionsanlage des Typs ME 45/4 x 25D der Firma IDE wurden Monorohre aus der erfindungsgemäß verwendeten Formmasse mit einem Außendurchmesser von 8,0 mm und einer Wandstärke von 1,0 mm bei 280 °C und einer Drehzahl von 100 U/min hergestellt.

### Beispiele 1 bis 3:

An einer Mehrschichtrohranlage der Firma Bellaform wurden Mehrschichtrohre mit jeweils einem Außendurchmesser von 8,0 mm und einer Gesamtwandstärke von 1,0 mm hergestellt. Die Schichtenkonfigurationen sind in der Tabelle 1 wiedergegeben.

### Prüfungen:

a) Zugversuch: Die Mono- und Mehrschichtrohre wurden in Anlehnung an DIN EN ISO 527-1 mit einer Abzugsgeschwindigkeit von 100 mm/min geprüft. Die Probekörper waren ca. 200 mm lang, die Einspannlänge betrug 100 mm und der Abstand der Dehnungsaufnehmer 50 mm.
b) Schlagbiegeversuch: Die Messung der Schlagzähigkeit der Mono- und Mehrschichtrohre erfolgte nach DIN 73378 bei 23 °C und -40 °C. Hierfür wurden jeweils zehn ca. 100 mm lange Rohrabschnitte eingesetzt.
c) Fallhammertest: Der Fallhammertest wurde nach SAE-Spezifikation durchgeführt. Dabei wurde ein spezifisches Gewicht aus einer vorgeschriebenen Fallhöhe auf den Prüfkörper fallen gelassen. Über diese Prüfung wurde nach SAE J2260 und SAE J844 das Schlagzähigkeitsverhalten der Mono- und Mehrschichtrohre bei Stoßeinwirkung bestimmt. Es wurden jeweils zehn Probekörper bei -40 °C gemessen und nach der Beanspruchung erfolgte eine visuelle Überprüfung auf Beschädigung.
d) Trennversuch: Der Trennversuch wurde mit einer Zugprüfmaschine des Typs BZ 2.5/TN1 S der Firma Zwick durchgeführt, an der eine Zugvorrichtung und ein sich drehendes Metallrad befestigt sind, um die einzelnen Schichten der Probekörper voneinander trennen zu können. Über den Trennversuch in Anlehnung an DIN EN ISO 2411 wurde die Haftung zwischen zwei Schichten beurteilt, indem die Kraft gemessen wurde, die benötigt wird, um die beiden Schichten voneinander zu trennen. Hierfür wurden von den Mehrschichtrohren 20 cm lange Rohrabschnitte mit Hilfe einer Schneidevorrichtung längs gedrittelt.
   Vor Beginn der Messung wurde mit Hilfe eines Messschiebers die Probenbreite mehrfach an unterschiedlichen Stellen gemessen und der Mittelwert in die Auswertesoftware eingetragen. Danach wurde das angetrennte Ende einer Schicht in eine Klemme eingespannt, die diese kontinuierlich in einem Winkel von 90° von der zweiten Schicht abzog.
   Die Schichten wurden mit einer Prüfgeschwindigkeit von 50 mm/min voneinander abgezogen und parallel dazu wurde ein Diagramm der benötigten Kraft in Newton gegen den Weg in Millimetern aufgenommen. Aus diesem wurde der Trennwiderstand in N/mm ermittelt, der sich auf die Breite der haftenden Kontaktfläche bezieht.

Die Ergebnisse sind in der Tabelle 1 dargestellt.

**Tabelle 1: Schichtenkonfigurationen und Prüfergebnisse**

| | Referenz | Beispiel 1 | Beispiel 2 | Beispiel 3 |
|---|---|---|---|---|
| Außenschicht | HI-PA6T/612, 1,0 mm | HI-PA6T/612; 0,45 mm | HI-PA6T/612; 0,8 mm | HI-PA6T/612; 0,75 mm |
| Zwischenschicht | - | Fluorpolymer; 0,1 mm | - | - |
| Innenschicht | - | HI-PA6T/612; 0,45 mm | Fluorpolymer; 0,2 mm | NEOFLON™ EP-7000; 0,25 mm |
| Haftung [N/mm] | | Außenschicht zu Zwischenschicht: 4,3 | Außenschicht zu Innenschicht: 6,2 | Außenschicht zu Innenschicht: 4,1 |
| | | Zwischenschicht zu Innenschicht: 5,1 | | |
| E-Modul [MPa] | 1121 | 1070 | 1070 | 646 |
| Bruchspannung [MPa] | 44 | 39 | 35 | 36 |
| Bruchdehnung [%] | 480 | 414 | 339 | 386 |
| Schlagzähigkeit 23 °C | kein Bruch | kein Bruch | kein Bruch | kein Bruch |
| Fallhammertest SAE J2260, -40 °C | kein Bruch | kein Bruch | kein Bruch | kein Bruch |

Die erfindungsgemäßen Rohre erfüllen daher die Anforderungen, die an Kraftstoffleitungen gestellt werden. Insbesondere ist auch die Bruchdehnung überraschend hoch.

## Patentansprüche

1. Mehrschichtverbund, der folgende Schichten enthält:
I. Eine erste Schicht (Schicht I) aus einer Formmasse, die zu mindestens 40 Gew.-% folgende Komponenten enthält:
1) 60 bis 99 Gew.-Teile eines teilaromatischen Copolyamids, das aus Monomereinheiten besteht, die sich herleiten von
α) 30 bis 90 Mol-% einer Kombination von Hexamethylendiamin und Terepthalsäure sowie
β) 70 bis 10 Mol-% einer Kombination von Hexamethylendiamin und einer linearen aliphatischen Dicarbonsäure mit 8 bis 19 C-Atomen;
wobei sich die Mol-%-Angaben auf die Summe von α) und β) beziehen und wobei maximal 20 % des Hexamethylendiamins durch die äquivalente Menge eines anderen Diamins ersetzt sein kann und/oder wobei maximal 20 % der Terephthalsäure durch die äquivalente Menge einer anderen aromatischen Dicarbonsäure und/oder 1,4-Cyclohexandicarbonsäure ersetzt sein kann und/oder wobei maximal 20 % der wiederkehrenden Einheiten aus Hexamethylendiamin und linearer aliphatischer Dicarbonsäure durch die äquivalente Menge von Einheiten ersetzt sein kann, die sich von einem Lactam beziehungsweise einer ω-Aminocarbonsäure mit 6 bis 12 C-Atomen herleiten,
2) 40 bis 1 Gew.-Teile eines olefinischen Copolymers als Schlagzähmodifier, wobei die Summe der Gew.-Teile von 1) und 2) 100 ergibt; sowie
II. eine zweite Schicht (Schicht II) aus einer Formmasse, die zu mindestens 60 Gew.-% aus Fluorpolymer besteht.

2. Mehrschichtverbund gemäß Anspruch 1, **dadurch gekennzeichnet, dass** die Formmasse der Schicht I 0,01 bis 60 Gew.-% weitere Zusätze enthält.

3. Mehrschichtverbund gemäß Anspruch 2, **dadurch gekennzeichnet, dass** einer der weiteren Zusätze ein kupferhaltiger Stabilisator ist.

4. Mehrschichtverbund gemäß einem der Ansprüche 2 und 3, **dadurch gekennzeichnet, dass** einer der weiteren Zusätze ein Oxidationsstabilisator ist.

5. Mehrschichtverbund gemäß einem der vorhergehenden Ansprüche, **dadurch gekennzeichnet, dass** der Kristallitschmelzpunkt Tₘ des Copolyamids der Schicht I im Bereich von 220 °C bis 300 °C liegt, gemessen gemäß ISO 11357 beim 2. Aufheizen.

6. Mehrschichtverbund gemäß einem der vorhergehenden Ansprüche, **dadurch gekennzeichnet, dass** das Fluorpolymer der Formmasse der Schicht II ausgewählt ist aus einem Polyvinylidenfluorid (PVDF), einem Vinylidenfluorid-Copolymer, das bis zu 40 Gew.-% andere Monomere enthält, einem Ethylen-Tetrafluorethylen-Copolymer (ETFE), einem mit Hilfe einer Terkomponente wie beispielsweise Propen, Hexafluorpropen, Vinylfluorid oder Vinylidenfluorid modifizierten ETFE, einem Ethylen-Chlortrifluorethylen-Copolymer (E-CTFE), einem Polychlortrifluorethylen (PCTFE), einem Tetrafluorethylen-Hexafluorpropen-Vinylidenfluorid-Copolymer (THV), einem Tetrafluorethylen-Hexafluorpropen-Copolymer (FEP) oder einem Tetrafluorethylen-Perfluoralkylvinylether-Copolymer (PFA).

7. Mehrschichtverbund gemäß einem der vorhergehenden Ansprüche, **dadurch gekennzeichnet, dass** er eine oder mehrere weitere Schichten enthält.

8. Mehrschichtverbund gemäß Anspruch 7, **dadurch gekennzeichnet, dass** die weitere Schicht oder die weiteren Schichten ausgewählt sind aus
• einer weiteren Schicht I,
• einer weiteren Schicht II,
• einer Haftvermittlerschicht,
• einer Schicht aus einer Formmasse auf Basis eines aliphatischen Polyamids,
• einer Schicht aus einer Polyesterformmasse und
• einer Schicht aus einer EVOH-Formmasse.

9. Mehrschichtverbund gemäß einem der vorhergehenden Ansprüche, **dadurch gekennzeichnet, dass** er eine Folie, eine Platte oder ein Hohlkörper ist.

10. Mehrschichtverbund gemäß Anspruch 9, **dadurch gekennzeichnet, dass** der Hohlkörper ein Hohlprofil, insbesondere ein Rohr, oder ein Behälter ist.

11. Mehrschichtverbund gemäß Anspruch 10, **dadurch gekennzeichnet, dass** er eine oder mehrere weitere Schichten enthält, die ausgewählt sind aus einer elektrisch leitfähigen Schicht und einer Elastomerummantelung.

12. Mehrschichtverbund gemäß einem der Ansprüche 10 und 11, **dadurch gekennzeichnet, dass** er eine Kraftstoffleitung, eine Hydraulikleitung, eine Bremsleitung, eine Kupplungsleitung, eine Kühlflüssigkeitsleitung, ein Liner für starre oder flexible Rohre in der Öl- oder Gasförderindustrie oder eine Leitung eines Umbilicals ist.

13. Mehrschichtverbund gemäß einem der Ansprüche 10 und 11, **dadurch gekennzeichnet, dass** er ein Bremsflüssigkeitsbehälter oder ein Kraftstoffbehälter ist.

## Claims

1. Multilayer composite comprising the following layers:
I. a first layer (layer I) of a moulding compound comprising at least 40 wt% of the following components:
1) 60 to 99 parts by wt. of a partly aromatic copolyamide which consists of monomer units which are derived from
α) 30 to 90 mol% of a combination of hexamethylenediamine and terephthalic acid and
β) 70 to 10 mol% of a combination of hexamethylenediamine and a linear aliphatic dicarboxylic acid having 8 to 19 carbon atoms;
wherein the mol% values relate to the sum of α) and β) and wherein not more than 20% of the hexamethylenediamine may be replaced by the equivalent amount of another diamine and/or wherein not more than 20% of the terephthalic acid may be replaced by the equivalent amount of another aromatic dicarboxylic acid and/or 1,4-cyclohexanedicarboxylic acid and/or wherein not more than 20% of the repeating units composed of hexamethylenediamine and linear aliphatic dicarboxylic acid may be replaced by the equivalent quantity of units derived from a lactam/an **ω**-aminocarboxylic acid having 6 to 12 carbon atoms,
2) 40 to 1 parts by wt of an olefinic copolymer as impact modifier,
wherein the parts by wt. of 1) and 2) sum to 100; and
II. a second layer (layer II) of a moulding compound comprising at least 60 wt% of fluoropolymer.

2. Multilayer composite according to Claim 1, **characterized in that** the moulding compound of layer I comprises 0.01 to 60 wt% of further additions.

3. Multilayer composite according to Claim 2, **characterized in that** one of the further additions is a copper-containing stabilizer.

4. Multilayer composite according to either of Claims 2 and 3, **characterized in that** one of the further additions is an oxidation stabilizer.

5. Multilayer composite according to any of the preceding claims, **characterized in that** the crystallite melting point Tₘ of the copolyamide of layer I is in the range from 220°C to 300°C when measured as per ISO 11357 at 2nd heating.

6. Multilayer composite according to any of the preceding claims, **characterized in that** the fluoropolymer of the moulding compound of layer II is selected from a polyvinylidene fluoride (PVDF), a copolymer based on vinylidene fluoride comprising up to 40 wt% of other monomers, an ethylene-tetrafluoroethylene copolymer (ETFE), an ETFE modified using a ter component such as propene, hexafluoropropene, vinyl fluoride or vinylidene fluoride, an ethylene-chlorotrifluoroethylene copolymer (E-CTFE), a polychlorotrifluoroethylene (PCTFE), a tetrafluoroethylene-hexafluoropropene-vinylidene fluoride copolymer (THV), a tetrafluoroethylene-hexafluoropropene copolymer (FEP) or a tetrafluoroethylene-perfluoroalkyl vinyl ether copolymer (PFA).

7. Multilayer composite according to any of the preceding claims, **characterized in that** said composite comprises one or more further layers.

8. Multilayer composite according to Claim 7, **characterized in that** the further layer or the further layers are selected from
• further layer I,
• further layer II,
• an adhesion promoter layer,
• a layer of a moulding compound based on an aliphatic polyamide,
• a layer of a polyester moulding compound and
• a layer of an EVOH moulding compound.

9. Multilayer composite according to any of the preceding claims, **characterized in that** said composite is a film, a sheet or a hollow article.

10. Multilayer composite according to Claim 9, **characterized in that** the hollow article is a hollow profile, in particular a pipe, or a container.

11. Multilayer composite according to Claim 10, **characterized in that** said composite comprises one or more further layers selected from an electrically conductive layer and an elastomer sheathing.

12. Multilayer composite according to either of Claims 10 and 11, **characterized in that** said composite is a fuel line, a hydraulic line, a brake line, a clutch line, a coolant line, a liner for rigid or flexible pipes in the oil or gas extraction industry or a line for an umbilical.

13. Multilayer composite according to either of Claims 10 and 11, **characterized in that** said composite is a brake fluid container or a fuel container.

## Revendications

1. Composite multicouche, qui contient les couches suivantes :
I. une première couche (couche I) en un matériau de moulage qui contient au moins 40 % en poids des composants suivantes :
1) 60 à 99 parties en poids d'un copolyamide partiellement aromatique, qui est constitué d'unités monomères dérivées de
α) 30 à 90 % en moles d'une combinaison d'hexaméthylène-diamine et d'acide téréphtalique, et
β) 70 à 10 % en moles d'une combinaison d'hexaméthylène-diamine et d'un acide dicarboxylique aliphatique linéaire de 8 à 19 atomes C ;
les données de % en moles se rapportant à la somme d'α) et de β) et au plus 20 % de l'hexaméthylène-diamine pouvant être remplacée par la quantité équivalente d'une autre diamine et/ou au plus 20 % de l'acide téréphtalique pouvant être remplacé par la quantité équivalente d'un autre acide dicarboxylique aromatique et/ou d'un acide 1,4-cyclohexanedicarboxylique et/ou au plus 20 % des unités de répétition d'hexaméthylène-diamine et d'acide dicarboxylique aliphatique linéaire pouvant être remplacées par la quantité équivalente d'unités qui dérivent d'un lactame ou d'un acide ω-aminocarboxylique de 6 à 12 atomes C,
2) 40 à 1 partie en poids d'un copolymère oléfinique en tant que modificateur de la résistance aux impacts, la somme des parties en poids de 1) et 2) étant de 100, et
II. une deuxième couche (couche II) en un matériau de moulage qui est constitué d'au moins 60 % en poids d'un fluoropolymère.

2. Composite multicouche selon la revendication 1, **caractérisé en ce que** le matériau de moulage de la couche I contient 0,01 à 60 % en poids d'additifs supplémentaires.

3. Composite multicouche selon la revendication 2, **caractérisé en ce qu'**un des additifs supplémentaires est un stabilisateur contenant du cuivre.

4. Composite multicouche selon l'une quelconque des revendications 2 et 3, **caractérisé en ce qu'**un des additifs supplémentaires est un stabilisateur d'oxydation.

5. Composite multicouche selon l'une quelconque des revendications précédentes, **caractérisé en ce que** le point de fusion des cristallites Tₘ du copolyamide de la couche I se situe dans la plage allant de 220 °C à 300 °C, mesuré selon ISO 11357 lors du 2^{e} chauffage.

6. Composite multicouche selon l'une quelconque des revendications précédentes, **caractérisé en ce que** le fluoropolymère du matériau de moulage de la couche II est choisi parmi un polyfluorure de vinylidène (PVDF), un copolymère de fluorure de vinylidène qui contient jusqu'à 40 % en poids d'autres monomères, un copolymère d'éthylène-tétrafluoroéthylène (ETFE), un ETFE modifié à l'aide d'un composant tertiaire tel que par exemple le propène, l'hexafluoropropène, le fluorure de vinyle ou le fluorure de vinylidène, un copolymère d'éthylène-chlorotrifluoroéthylène (E-CTFE), un polychlorotrifluoroéthylène (PCTFE), un copolymère de tétrafluoroéthylène-hexafluoropropène-fluorure de vinylidène (THV), un copolymère de tétrafluoroéthylène-hexafluoropropène (FEP) ou un copolymère de tétrafluoroéthylène-éther de perfluoroalkylvinyle (PFA).

7. Composite multicouche selon l'une quelconque des revendications précédentes, **caractérisé en ce qu'**il contient une ou plusieurs couches supplémentaires.

8. Composite multicouche selon la revendication 7, **caractérisé en ce que** la couche supplémentaire ou les couches supplémentaires sont choisies parmi :
- une couche I supplémentaire,
- une couche II supplémentaire,
- une couche de promoteur d'adhésion,
- une couche en un matériau de moulage à base d'un polyamide aliphatique,
- une couche en un matériau de moulage polyester et
- une couche en un matériau de moulage EVOH.

9. Composite multicouche selon l'une quelconque des revendications précédentes, **caractérisé en ce qu'**il s'agit d'un film, d'une plaque ou d'un corps creux.

10. Composite multicouche selon la revendication 9, **caractérisé en ce que** le corps creux est un profilé creux, notamment un tube, ou un contenant.

11. Composite multicouche selon la revendication 10, **caractérisé en ce qu'**il contient une ou plusieurs couches supplémentaires qui sont choisies parmi une couche électriquement conductrice et un enrobage élastomère.

12. Composite multicouche selon l'une quelconque des revendications 10 et 11, **caractérisé en ce qu'**il s'agit d'une conduite de carburant, d'une conduite hydraulique, d'une conduite de frein, d'une conduite de couplage, d'une conduite de liquide de refroidissement, d'un revêtement intérieur pour tubes rigides ou flexibles dans l'industrie de l'extraction de pétrole ou de gaz ou une conduite d'une liaison ombilicale.

13. Composite multicouche selon l'une quelconque des revendications 10 et 11 **caractérisé en ce qu'**il s'agit d'un contenant de liquide de frein ou d'un contenant de carburant.
